(19) Europäisches Patentamt
European Patent Office
Office européen des brevets

(11) Veröffentlichungsnummer: **0 077 953**
**B1**

(12) # EUROPÄISCHE PATENTSCHRIFT

(45) Veröffentlichungstag der Patentschrift: **17.04.85**

(51) Int. Cl.⁴: **C 08 G 65/26**, C 07 C 41/02

(21) Anmeldenummer: **82109319.2**

(22) Anmeldetag: **08.10.82**

(54) **Verfahren zur Herstellung von Polyoxyalkylenethern.**

(30) Priorität: **23.10.81 DE 3142041**

(43) Veröffentlichungstag der Anmeldung:
**04.05.83 Patentblatt 83/18**

(45) Bekanntmachung des Hinweises auf die Patenterteilung:
**17.04.85 Patentblatt 85/16**

(84) Benannte Vertragsstaaten:
**BE FR GB IT NL**

(56) Entgegenhaltungen:
**US - A - 2 782 240**

(73) Patentinhaber: **Th. Goldschmidt AG, Goldschmidtstrasse 100 Postfach 101461, D-4300 Essen 1 (DE)**

(72) Erfinder: **Fock, Jürgen, Dr., Mörsenbroicher Weg 114, D-4000 Düsseldorf 30 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Die Erfindung betrifft ein Verfahren zur Herstellung von Polyoxyalkylenethern der Formel

$$R^1O-[C_nH_{2n}O-]_xM$$

wobei

$R^1$ ein Alkylrest mit 1 bis 4 Kohlenstoffatomen, ein Alkenylrest, ein Arylrest oder ein Alkarylrest,
M ein Alkalikation,
n eine beliebige Zahl von 2 bis 3 und
x eine ganze Zahl ist,

durch stöchiometrische Polymerisation von Alkylenoxiden oder deren Gemischen der allgemeinen Formel $C_nH_{2n}O$ an Alkalialkoholate der allgemeinen Formel $MOR^1$ bei Temperaturen von 60 bis 150° C.

Als Alkylreste mit 1 bis 4 Kohlenstoffatomen sind der Methyl-, Ethyl-, n-Propyl-, iso-Propyl-, n-Butyl- und iso-Butylrest zu nennen. Alkenylreste sind insbesondere der Allyl- und Methallylrest. Der Arylrest ist im allgemeinen der Phenylrest, der auch substituiert sein kann. Als Substituenten kommen insbesondere Alkylreste in Frage.

In der DE-A-3 121 929 ist ein Verfahren zur Herstellung von Polyoxyalkylenmonoallyl- oder -methallylethern der allgemeinen Formel

$$R^1O-[C_nH_{2n}O-]_xCH_2\overset{\displaystyle R^2}{\overset{|}{C}}=CH_2$$

wobei

$R^1$ ein Alkylrest mit 1 bis 4 Kohlenstoffatomen, ein Arylrest oder ein Alkarylrest,
$R^2$ ein Wasserstoff- oder Methylrest,
n eine beliebige Zahl von 2 bis 3 und
x eine ganze Zahl ist,

die eine enge Molekulargewichtsverteilung aufweisen, beschrieben. Das Kennzeichen des Verfahrens besteht darin, daß man zunächst Polyoxyalkylenether der Formel

$$R^1O-[C_nH_{2n}O-]_xM$$

durch stöchiometrische Polymerisation von Alkylenoxiden oder deren Gemischen der allgemeinen Formel $C_nH_{2n}O$ an Alkalialkoholate der allgemeinen Formel $MOR^1$, wobei M ein Alkalikation ist, bei Temperaturen von 60 bis 130° C herstellt und dann dieses Zwischenprodukt mit einem Allyl- oder Methallylhalogenid in an sich bekannter Weise umsetzt und das Verfahrensprodukt von dem als Nebenprodukt gebildeten Salz MX abtrennt.

In der ersten Verfahrensstufe wird somit zunächst in an sich bekannter Weise ein Alkylenoxid der Formel $C_nH_{2n}O$ an stöchiometrische Mengen eines Alkalialkoholates der Formel $MOR^1$ angelagert. Unter dem Begriff der stöchiometrischen Menge ist die Menge Alkoholat zu verstehen, die der Menge der resultierenden Polyoxyalkylenketten äquivalent ist, so daß jede einzelne Kette durch ein Alkoxyanion gestartet wird und jede Kette ein Alkaliion aufweist.

Es war jedoch überraschend, daß trotz der Verwendung hoher Mengen an Alkalialkoholaten die an sich bekannte und zu erwartende Isomerisierung von Propylenoxid in Allylalkohol nur in sehr geringem Maß stattfindet und die im ersten Verfahrensschritt erhaltenen Zwischenprodukte nur einen geringen Gehalt an Doppelbindungen aufweisen. Diese zu erwartende Isomerisierung des Propylenoxids wird insbesondere dann weitgehend vermieden, wenn das Propylenoxid, gegebenenfalls im Gemisch mit Ethylenoxid, an Natriummethylat bei Temperaturen bis zu 100° C angelagert wird.

Bei der Durchführung dieser Verfahrensstufe hat sich gezeigt, daß mitunter bei der Anlagerung des Alkylenoxids Verzögerungen der Reaktion zu beobachten sind. Das dem Reaktor zugeführte Alkylenoxid wird zunächst nicht angelagert, so daß sich im Reaktor bei weiterer Zuführung von Alkylenoxid eine größere Menge nichtumgesetzten Alkylenoxids befindet, bis dann die Reaktion einsetzt und durch die freigesetzte Reaktionswärme sich selbst beschleunigend, explosionsartig verläuft. Abgesehen davon, daß bei einer solchen plötzlich einsetzenden Reaktion durch die Druck- und Temperatursteigerung Störungen in der Molekulargewichtsverteilung und ganz allgemein in der Zusammensetzung der Reaktionsprodukte auftreten können, kann eine solche schlagartig einsetzende Reaktion zu einer Gefährdung des Bedienungspersonals führen.

Derartige Reaktionsverzögerungen treten insbesondere im Temperaturbereich bis zu etwa 100° C auf. Steigert man die Reaktionstemperatur auf etwa 120 bis 130° C, verringert sich die Tendenz zu solchen Reaktionsverzögerungen. Jedoch begünstigt eine höhere Reaktionstemperatur die Bildung von Produkten relativ kleineren Molekulargewichts, so daß die gefundene Hydroxylzahl größer als die theoretisch errechnete Hydroxylzahl der Produkte ist. Bei Verwendung von Propylenoxid als Alkylenoxid wird überdies die Isomerisierung zu Allylalkohol begünstigt.

Vorliegender Erfindung liegt die Aufgabe zugrunde, den Reaktionsverlauf bei der Anlagerungsreaktion des Alkylenoxids oder Alkylenoxidgemisches so zu verbessern, daß auch bei einer Reaktionstemperatur von 80 bis 100° C die Anlagerungsreaktion gleichmäßig und schnell verläuft, ohne daß Reaktionsverzögerungen eintreten.

Diese Aufgabe kann erfindungsgemäß dadurch gelöst werden, daß man als Alkalialkoholate Gemische von 1 bis 20 Mol-% Kaliumalkoholat und 99 bis 80 Mol-% Natriumalkoholat verwendet. Vorzugsweise verwendet man als Alkalialkoholate Gemische von 5 bis 15 Mol-% Kaliumalkoholat und 95 bis 85 Mol-% Natriumalkoholat.

Durch den teilweisen Ersatz des Natriumalkoholats durch Kaliumalkoholat wird die gewünschte Vergleichmäßigung der Reaktion bewirkt. Dabei war es überraschend, daß auf der einen Seite der Verlauf der Reaktion geglättet, auf der anderen Seite aber die Isomerisierung des Propylenoxids in Allylalkohol dennoch in Grenzen gehalten werden kann. Verglichen mit dem Stand der Technik bedeutet dies, daß man bei der erfindungsgemäßen Verwendung des Alkalialkoholatgemsiches bei relativ niedrigen Reaktionstemperaturen Polyoxyalkylenether erhält, deren Gehalt an ungesättigten Verbindungen niedriger ist, als wenn man nach dem Stand der Technik Natriumalkoholat verwendet und gezwungen ist, Temperaturen von 120 bis 130° C einzuhalten.

Durch die Möglichkeit, die Reaktion nun bei glattem Verlauf bereits bei 80 bis 100° C durchzuführen, erhält man als Verfahrensprodukte Polyoxyalkylenether mit enger Molekulargewichtsverteilung und niedrigerem Gehalt an Doppelbindungen, als er sich bei höherer Temperatur einstellen würde. Die Verfahrensprodukte weisen einen Hydroxylgruppengehalt, bestimmt durch die OH-Zahl, auf, der der theoretisch errechenbaren Hydroxylzahl wesentlich besser entspricht.

Eine besondere Ausgestaltung des erfindungsgemäßen Verfahrens besteht darin, daß man die Reaktion in Verdünnungsmitteln, wie aliphatischen oder aromatischen Kohlenwasserstoffen, durchführt. Beispiele solcher Verdünnungsmittel sind Hexan und Toluol. Besonders gute Ergebnisse werden erhalten, wenn man die Reaktion in komplexierenden Lösungsmitteln oder Verdünnungsmitteln durchführt, die eine Ionenseparation bewirken. Solche Verdünnungsmittel sind z. B. Polyoxyalkylenmono- oder -diether.

Es hat sich dabei gezeigt, daß die Additionsreaktion besonders schnell und glatt verläuft, wenn man das Alkalialkoholatgemsich im Verdünnungsmittel möglichst feindispers verteilt. Dies kann mit Hilfe eines scherkraftreichen Rührers geschehen. Beispiele scherkraftreicher Rührer sind solche, die nach dem Rotor-Stator-Prinzip arbeiten und im Handel unter der Bezeichnung Ultra-Turrax und Supraton erhältlich sind. Die Feinverteilung des Alkalialkoholatgemisches führt zu einer erheblichen Steigerung der Reaktionsgeschwindigkeit. Insbesondere bei diskontinuierlicher Zugabe kleiner Mengenanteile eines Ethylenoxid-Propylenoxid-Gemisches werden Produkte mit sehr gleichmäßiger Ethylenoxid-Propylenoxid-Verteilung erhalten.

Die erfindungsgemäß hergestellten Polyoxyalkylenether können in üblicher Weise weiterverarbeitet werden. Man kann die erfindungsgemäß erhaltenen Alkalisalze der Polyoxyalkylenether durch Einwirkung von Säure, z. B. wäßriger Salzsäure, in Polyoxyalkylenmonoalkylether überführen. Entsprechend dem in der Patentanmeldung P 31 21 929.2 gezeigten Verfahren kann man die Alkalisalze der erfindungsgemäß erhaltenen Polyoxyalkylenether in Anwendung einer Williamsonschen Synthese mit Halogenkohlenwasserstoffen umsetzen. Als Halogenkohlenwasserstoffe eignen sich sowohl gesättigte als auch ungesättigte Halogenkohlenwasserstoffe mit einem oder mehreren Halogenatomen, vorzugsweise Chlor- oder Bromatomen, im Molekül, wie z. B. Methyl-, Ethyl-, n-Propyl-, iso-Propylchlorid und primäres, sekundäres oder tertiäres Butylchlorid; ferner Allyl- oder Methallylchlorid, Benzylchlorid, Methyl- oder Ethylbromid oder Dibromethan.

Das erfindungsgemäße Verfahren wird durch die folgenden Beispiele noch näher erläutert.

## Beispiel 1

243 g (ca. 4,5 Mol) Natriummethylat und 35 g (ca. 0,5 Mol) Kaliummethylat werden in einem Reaktor mit einem zwangsfördernden Umlaufsystem und zusätzlichem Rührer in 1250 ml wasserfreiem Toluol dispergiert. Nach sorgfältiger Spülung mit Reinstickstoff wird auf 80° C geheizt und ein Gemisch von 768 g (ca. 13,2 Mol) Propylenoxid und 3072 g (ca. 70 Mol) Ethylenoxid so schnell zugegeben, daß die Reaktorinnentemperatur 90° C und der Druck 3 bar nicht überschreiten. Nach vollständiger Einleitung des Alkylenoxidgemisches wird die Temperatur so lange auf 80° C gehalten, bis ein gleichbleibender

Druck das Ende der Nachreaktion anzeigt. Danach werden bei 80 bis 90°C unter Vakuum die Restmonomeren und das Toluol entfernt.

Eine Probe des erhaltenen Produktes wird mit Hilfe von Phosphorsäure neutralisiert und das Wasser durch Destillation, das entstandene Natriumphospaht durch Filtration mit einem Filterhilfsmittel entfernt. Die Hydroxylzahl des Verfahrensproduktes beträgt 72, was bei einer angenommenen Funktionalität von 1 einem Molekulargewicht von 779 entspricht; die Jodzahl beträgt 1,1 und entspricht damit einem Gehalt von ca. 3,4 Mol-% Doppelbindungen.

## Beispiel 2

Gemäß dem Verfahren in Beispiel 1 werden an Gemische von Natrium- und Kaliumalkoholat unterschiedlicher Zusammensetzung, die in jeweils 250 ml Toluol dispergiert worden sind, in erster Stufe je 150 g (ca. 2,6 Mol) Propylenoxid und in zweiter Stufe je 620 g (ca. 14,1 Mol) Ethylenoxid angelagert. Die Zugabe des Propylenoxids erfolgt in 3 Schritten von je 50 ml, wobei jeweils 7 min nach Zugabe abgewartet werden, die des Ethylenoxids in 13 Schritten von je 50 ml. Nach jeder Stufe werden 1,5 Stunden bis zur vollständigen Beendigung der Reaktion abgewartet.

In den Diagrammen 1 bis 4 ist die Temperatur/Zeit-Kurve der Anlagerungsreaktion dargestellt. Der Tabelle 1 kann die Abhängigkeit der Höhe der Temperaturmaxima während der exotherm verlaufenden Alkoxylierung, der Hydroxylzahl, des Molekulargewichts, der Jodzahl und des Gehaltes an Doppelbindungen in Mol-% nach der Neutralisation von Gehalt an $KOCH_3$ im Alkoholatgemisch entnommen werden. Es zeigt sich deutlich, daß die partielle Substitution von $NaOCH_3$ durch $KOCH_3$ eine verbesserte Kontrolle der Reaktion, eine bessere Übereinstimmung von theoretischer und gefundener Hydroxylzahl und einen verminderten Ungesättigtheitsgrad der Reaktionsprodukte zur Folge hat.

Tabelle 1

| $NaOCH_3$/ $KOCH_3$ Mol-% | Gewichtsverhältnis g/g | Temperaturmaximum*) °C | Hydroxylzahl**) gef. | Molekulargewicht | Jodzahl | Doppelbindungsgehalt Mol-% |
|---|---|---|---|---|---|---|
| 100/0 | 54,0/0 | >180/n. 7. Schritt | 101 | 555 | 2,9 | 6,3 |
| 95/5 | 51,3/3,5 | 92/n. 4. Schritt | 82 | 684 | 1,6 | 4,3 |
| 90/10 | 48,6/7,0 | 86/n. 4. Schritt | 74 | 758 | 1,1 | 3,3 |
| 80/20 | 43,2/14 | 87/n. 6. Schritt | 76 | 738 | 1,2 | 3,5 |

*) Bei Ethylenoxidzugabe.
**) Hydroxylzahl theor. = 80,2.

## Beispiel 3

Gemäß Beispiel 1 wird an ein Gemisch von 90 Mol-% Natriummethylat und 10 Mol-% Kaliummethylat und an reines Natriummethylat Ethylenoxid und Propylenoxid im Gemisch bei 110°C und 140°C Reaktionstemperatur angelagert.

In Tabelle 2 ist die Abhängigkeit der Hydroxylzahl und der Jodzahl von der Reaktionstemperatur angegeben. Es läßt sich erkennen, daß die Abweichung der gefundenen von der theoretischen Hydroxylzahl mit der Temperatur zunimmt und ebenso der Ungesättigtheitsgrad leicht zunimmt.

Tabelle 2

| $NaOCH_3/KOCH_3$ Mol-% | Reaktionstemperatur °C | Hydroxylzahl*) gef. | Molekulargewicht | Jodzahl | Doppelbindungsgehalt Mol-% |
|---|---|---|---|---|---|
| 90/10 | 80 | 72 | 779 | 1,1 | 3,4 |
| 90/10 | 110 | 90 | 623 | 1,7 | 4,2 |
| 90/10 | 140 | 95 | 591 | 1,9 | 4,4 |
| 100/0 | 110 | 109 | 515 | 3,1 | 6,3 |

*) Hydroxylzahl theor. = 80,0.

Beispiel 4

Es wird wie in Beispiel 1 beschrieben verfahren, mit der Ausnahme, daß anstelle von Toluol ein Methyl-allyl-polyoxypropylen-diether eines Molekulargewichtes von etwa 800 in einer Menge von 1000 g als Verdünnungsmittel für das Gemisch aus Natrium- und Kaliummethylat eingesetzt wird. Die Verteilung des Alkoholatgemisches erfolgt dabei mit einem scherkraftreichen Rührer unter Ausschluß von Feuchtigkeit und Luft.

Eine Probe des erhaltenen Alkalipolyethers wird mit Hilfe von Phosphorsäure neutralisiert und nach Entfernung des Wassers und des entstandenen Natriumphosphates durch Destillation bzw. Filtration mit Hilfe eines Filterhilfsmittels analysiert. Die Hydroxylzahl unter Berücksichtigung des Zusatzes an Verfahrensprodukt beträgt 71,6, was bei einer angenommenen Funktionalität von 1 einem Molekulargewicht von 783 entspricht; die Jodzahl beträgt 0,8 und entspricht damit einem Gehalt an 2,6 Mol-% Doppelbindungen.

Beispiel 5

Gemäß dem Verfahren in Beispiel 1 wird an ein Gemisch von 48,6 g (ca. 0,9 Mol) Natriummethylat und 7 g (ca. 0,1 Mol) Kaliummethylat, das in 150 g Dimethyl-polyethylen-polyoxypropylen-diether eines Molekulargewichtes von etwa 2300 fein dispergiert ist, ein Gemisch von 1040 g (ca. 23,6 Mol) Ethylenoxid und 1320 g (ca. 22,8 Mol) Propylenoxid angelagert.

Die Hydroxylzahl einer neutralisierten Probe des Produktes beträgt 24,8, was bei einer angenommenen Funktionalität von 1 einem Molekulargewicht von 2260 entspricht; die Jodzahl beträgt 1,1 und entspricht damit einem Gehalt von ca. 10 Mol-% Doppelbindungen.

**Patentansprüche**

1. Verfahren zur Herstellung von Polyoxyalkylenethern der Formel

$$R^1O-[C_nH_{2n}O-]_xM$$

wobei

$R^1$ ein Alkylrest mit 1 bis 4 Kohlenstoffatomen, ein Alkenylrest, ein Arylrest oder ein Alkarylrest,
M ein Alkalikation
n eine beliebige Zahl von 2 bis 3 und
x eine ganze Zahl ist,

durch stöchiometrische Polymerisation von Alkylenoxiden oder deren Gemischen der allgemeinen Formel $C_nH_{2n}O$ an Alkalialkoholate der allgemeinen Formel $MOR^1$ bei Temperaturen von 60 bis 150°C, dadurch gekennzeichnet, daß man als Alkalialkoholate Gemische von 1 bis 20 Mol-% Kaliumalkoholat und 99 bis 80 Mol-% Natriumalkoholat verwendet.

2. Verfahren nach Anspruch 1, dadurch gekennzeichnet, daß man als Alkalialkoholate Gemische von 5 bis 15 Mol-% Kaliumalkoholat und 95 bis 85 Mol-% Natriumalkoholat verwendet.

3. Verfahren nach Anspruch 1 oder 2, dadurch gekennzeichnet, daß man die Reaktion in einem Verdünnungsmittel durchführt.

4. Verfahren nach Anspruch 3, dadurch gekennzeichnet, daß man das Alkalialkoholatgemisch im Verdünnungsmittel feindispers verteilt.

5. Verfahren nach Anspruch 3 oder 4, dadurch gekennzeichnet, daß man die Reaktion in einem Polyalkylenglykolmono- oder -diether als Verdünnungsmittel durchführt.

## Claims

1. Process for the preparation of polyoxyalkylene ethers of the formula

$$R^1O-[C_nH_{2n}O-]_xM$$

wherein

$R^1$ is an alkyl radical with 1 to 4 carbon atoms, an alkenyl radical, an aryl radical or an alkaryl radical,
M is an alkali metal cation,
n is any desired number from 2 to 3 and
x is an integer,

by stoichiometric polymerisation of alkylene oxides or their mixtures, of the general formula $C_nH_{2n}O$, onto alkali metal alcoholates of the general formula $MOR^1$ at temperatures of 60 to 150° C, characterised in that mixtures of 1 to 20 mole % of potassium alcoholate and 99 to 80 mole % of sodium alcoholate are used as alkali metal alcoholates.

2. Process according to Claim 1, characterised in that mixtures of 5 to 15 mole % of potassium alcoholate and 95 to 85 mole % of sodium alcoholate are used as alkali metal alcoholates.

3. Process according to Claim 1 or 2, characterised in that the reaction is carried out in a diluent.

4. Process according to Claim 3, characterised in that the alkali metal alcoholate mixture is finely dispersed in the diluent.

5. Process according to Claim 3 or 4, characterised in that the reaction is carried out in a polyalkylene glycol monoether or diether as the diluent.

## Revendications

1. Procédé pour la préparation d'éthers polyoxyalkylénés de formule

$$R^1O-[C_nH_{2n}O-]_xM$$

ou

$R^1$ est un radical alkyle à 1 à 4 atomes de carbone, un radical alcényle, un radical aryle ou un radical alcaryle,
M est un cation alcalin
n est un nombre quelconque de 2 à 3, et
x est un nombre entier,

par polymérisation stoechiométrique d'oxydes d'alkylène ou de leurs mélanges de formule générale $C_nH_{2n}O$ sur des alcolates alcalins de formule générale $MOR^1$ à des températures de 60 à 150° C, caractérisé en ce que l'on utilise en tant qu'alcoolates alcalins des mélanges de 1 à 20% molaire d'alcoolate de potassium et de 99 à 80% molaire d'alcoolate de sodium.

2. Procédé selon la revendication 1, caractérisé en ce que l'on utilise en tant qu'alcoolates alcalins des mélanges de 5 à 15% molaire d'alcoolate de potassium et de 95 à 85% molaire d'alcoolate de sodium.

3. Procédé selon la revendication 1 ou 2, caractérisé en ce que l'on met en oeuvre la réaction dans un diluant.

4. Procédé selon la revendication 3, caractérisé en ce que l'on répartit en dispersion fine le mélange d'alcoolates alcalins dans le diluant.

5. Procédé selon la revendication 3 ou 4, caractérisé en ce que l'on met en oeuvre la réaction dans un mono- ou diéther de polyalkylèneglycol en tant que diluant.

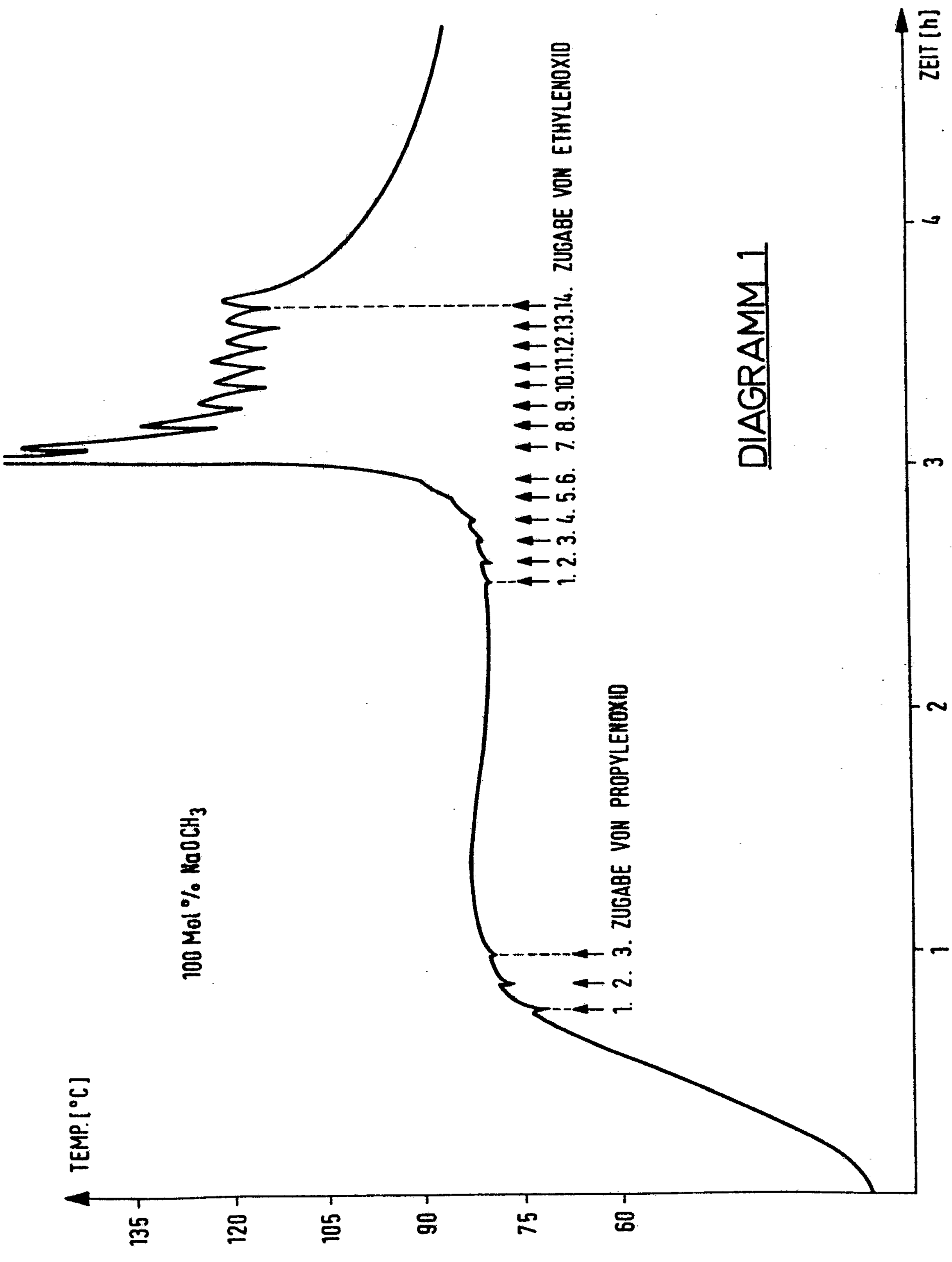
DIAGRAMM 1
TEMP. [°C]
135
120
105
90
75
60
ZEIT [h]
1
2
3
4
100 Mol % NaOCH$_3$
1. 2. 3. ZUGABE VON PROPYLENOXID
1. 2. 3. 4. 5. 6. 7. 8. 9. 10. 11. 12. 13. 14. ZUGABE VON ETHYLENOXID

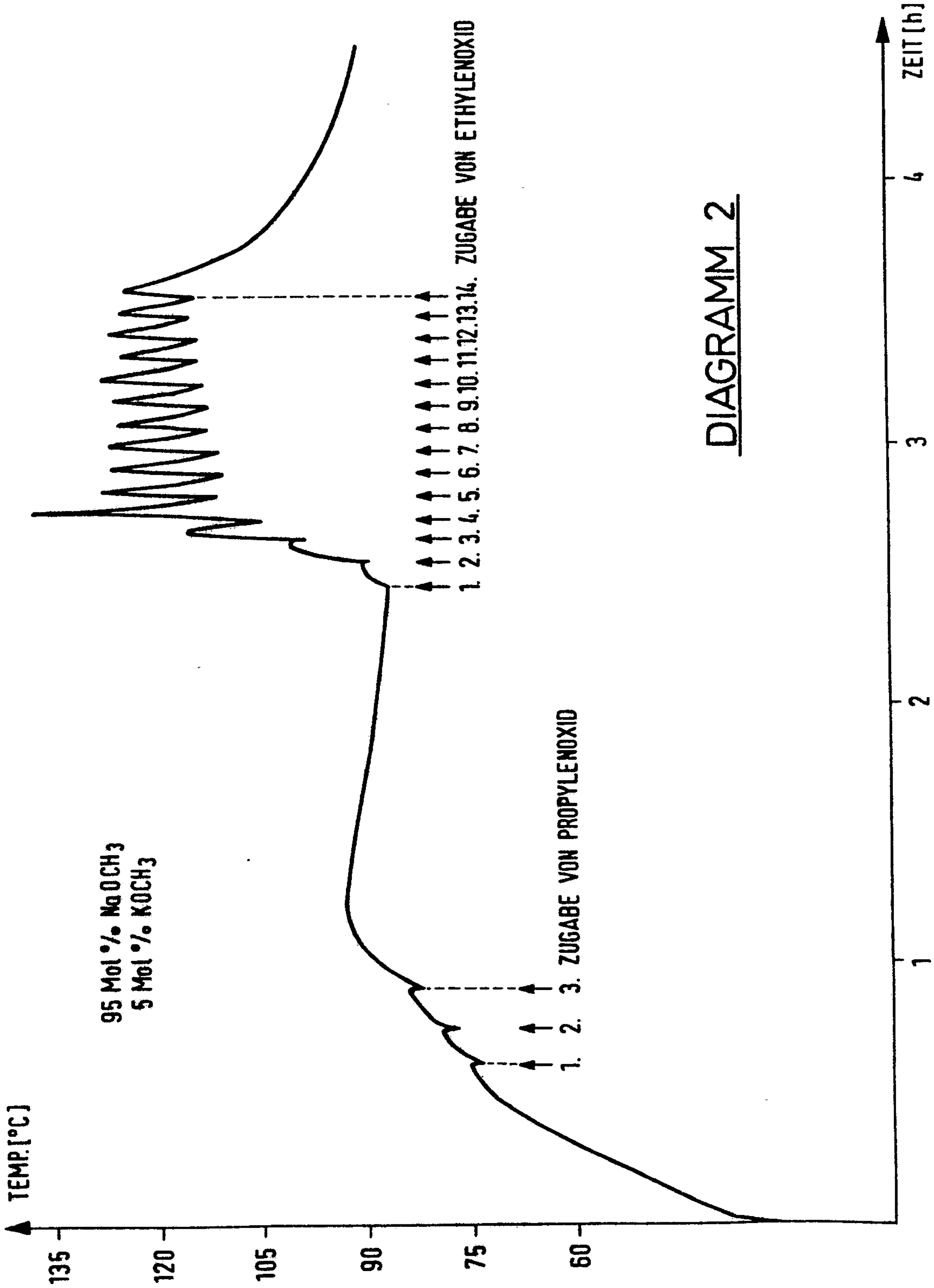
TEMP.[°C]
135
120
105
90
75
60
ZEIT [h]
1
2
3
4
95 Mol % NaOCH3
5 Mol % KOCH3
1. 2. 3. ZUGABE VON PROPYLENOXID
1. 2. 3. 4. 5. 6. 7. 8. 9. 10. 11. 12. 13. 14. ZUGABE VON ETHYLENOXID
DIAGRAMM 2

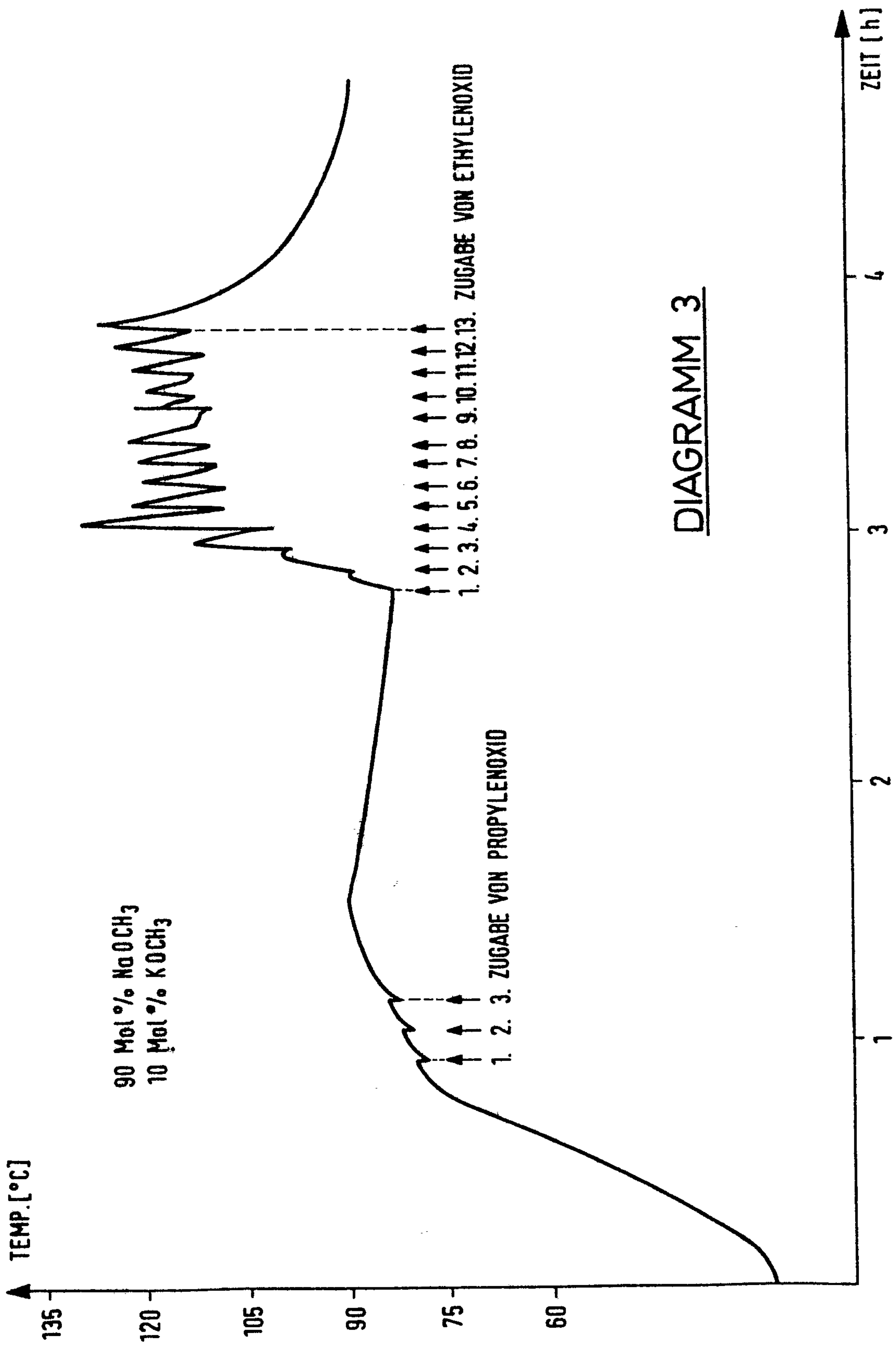
TEMP. [°C]
135
120
105
90
75
60
ZEIT [h]
1
2
3
4
90 Mol % NaOCH$_3$
10 Mol % KOCH$_3$
1. 2. 3. ZUGABE VON PROPYLENOXID
1. 2. 3. 4. 5. 6. 7. 8. 9. 10. 11. 12. 13. ZUGABE VON ETHYLENOXID

DIAGRAMM 3